# FASCICULE DE BREVET EUROPEEN

(11) **EP 1 072 766 B1**
(45) Date de publication et mention de la délivrance du brevet: **06.05.2004**
(21) Numéro de dépôt: 00402113.5
(22) Date de dépôt: 24.07.2000
(51) Int. Cl.: F01P 7/16, B60H 1/00

(54) **Dispositif de régulation du refroidissement d'un moteur thermique de véhicule automobile**
Kühlungssteuervorrichtung einer Brennkraftmaschine eines Kraftfahrzeugs
Cooling controlling device of an internal combustion engine of a motor vehicle

(30) Priorité: 30.07.1999 FR 9909953
(43) Date de publication de la demande: 31.01.2001
(73) Titulaire: VALEO THERMIQUE MOTEUR, 78321 La Verrière (FR)
(72) Inventeur: Perset, Denis, 75015 Paris (FR)
(74) Mandataire: Rolland, Jean-Christophe

(56) Documents cités:
- EP-A- 0 557 113
- EP-A- 0 894 954
- US-A- 4 768 484
- US-A- 5 724 924
- PATENT ABSTRACTS OF JAPAN vol. 007, no. 071 (M-202), 24 mars 1983 (1983-03-24) & JP 57 212323 A (TOYO KOGYO KK), 27 décembre 1982 (1982-12-27)

## Description

L'invention se rapporte aux moteurs thermiques des véhicules automobiles, et elle concerne plus particulièrement un dispositif de régulation du refroidissement d'un tel moteur thermique.

Dans les véhicules automobiles actuels à moteur thermique, le dispositif de refroidissement comprend un circuit de refroidissement parcouru par un fluide, qui est généralement de l'eau additionné d'un antigel. Le circuit est couplé à une pompe à fluide pour refroidir le moteur thermique dont le fonctionnement est défini à chaque instant par un régime et une charge en cours. En outre, ce circuit de refroidissement alimente une installation de chauffage et/ou climatisation de l'habitacle du véhicule, à paramètres aérothermiques réglables, comportant un aérotherme.

Habituellement, la pompe à fluide est entraînée de façon mécanique par le vilebrequin du moteur, si bien que le débit de la pompe dépend directement du régime du moteur. Il en résulte que l'énergie qui est prélevée par la pompe sur l'arbre moteur n'est pas optimisée. En fait, cette énergie est généralement très supérieure au besoin. Par conséquent, d'une part, on consomme inutilement de l'énergie du moteur, d'où une surconsommation de carburant, et d'autre part, on sur-refroidit le moteur, et notamment l'huile de son circuit d'huile, d'où une augmentation des frottements et par conséquent une baisse du rendement du moteur.

L'invention a notamment pour but de remédier à ces inconvénients.

Elle vise en particulier à réguler le refroidissement du moteur thermique dans un état de démarrage du moteur, qui correspond à une phase où le moteur est froid, encore appelée phase de mise en action.

L'invention propose à cet effet un dispositif du type défini en introduction, lequel comprend :
- des moyens pour établir un état de démarrage du moteur en fonction de conditions choisies ; et
- des moyens actifs en cet état de démarrage pour, en fonction d'une grandeur représentative de la demande de chauffage, et d'au moins une autre grandeur,
   * soit stopper la pompe si la demande de chauffage est inférieure à un certain seuil,
   * sinon piloter la pompe en fonction d'un régime de saturation.

Ainsi, le dispositif de l'invention détermine d'abord si le moteur est dans son état de démarrage et, si c'est le cas, il stoppe ou pilote la pompe en fonction d'une grandeur représentative de la demande de chauffage, et d'au moins une autre grandeur.

Il en résulte que le dispositif calcule le débit minimal de la pompe nécessaire au moteur pour qu'il se refroidisse à l'instant du calcul. On peut ainsi réguler de façon optimisée le débit de la pompe, et par conséquent le refroidissement du moteur, pendant cet état de démarrage.

Le dispositif selon l'invention peut comprendre d'autres caractéristiques complémentaires pouvant être prises séparément ou en combinaison, et notamment :
- les moyens pour établir l'état de démarrage du moteur comprennent des moyens pour détecter le fonctionnement du moteur et des moyens pour mesurer ou estimer une température représentative de l'état thermique du moteur et la comparer à un seuil donné, afin d'établir l'état de démarrage lorsque cette température est inférieure à ce seuil ;
- les moyens pour détecter le fonctionnement du moteur comprennent un capteur pour détecter si le contact du moteur est ouvert et un capteur pour détecter si le régime du moteur dépasse un seuil donné ;
- la température représentative de l'état thermique du moteur est une température matière du moteur ;
- la température représentative de l'état thermique du moteur est une température du fluide en sortie du moteur ;
- la température représentative de l'état thermique du moteur est une température du fluide dans le moteur ;
- la température représentative de l'état thermique du moteur est une température de l'huile de lubrification du moteur ;
- la grandeur représentative de la demande de chauffage est une position de chauffage définie par une valeur en pourcentage de la demande de chauffage maximale, et les moyens actifs reçoivent en outre une grandeur représentative d'un écart de température entre la température du fluide en sortie du moteur et la température de l'air ambiant ;
- les moyens actifs comprennent des moyens de commande propres à stopper ou piloter la pompe comme suit :
   * si la demande de chauffage est nulle ou inférieure au seuil, alors stopper la pompe,
   * si la demande de chauffage dépasse le seuil, alors
      ** si l'écart de température est inférieur à un premier seuil, stopper la pompe ;
      ** si l'écart de température est supérieur au premier seuil et inférieur à un deuxième seuil, piloter la pompe en établissant le régime de la pompe à une valeur proportionnelle au régime de saturation qui correspond au régime de la pompe permettant d'obtenir un débit de saturation dans l'aérotherme ;
      ** si l'écart de température est supérieur au deuxième seuil, alors piloter la pompe en établissant le régime de la pompe à une valeur égale au régime de saturation ;
- l'autre condition est liée à une température de matière représentative de l'état thermique du moteur ;
- dans le cas où la température matière est disponible, le dispositif comprend des moyens de comparaison pour comparer la température matière à une température seuil, et
   ** si la température matière est inférieure à ce seuil, alors activer lesdits moyens actifs,
   ** si la température matière est supérieure à ce seuil, alors inactiver lesdits moyens actifs et établir le régime de pompe à la juste valeur nécessaire au bon fonctionnement du moteur en tenant compte du régime et de la charge en cours du moteur ;
- dans le cas où la température matière est indisponible, le dispositif comprend des moyens d'estimation pour estimer cette température matière ;
- ces moyens d'estimation sont choisis parmi :
   un modèle de moteur thermique qui calcule la température matière en fonction d'un historique régime moteur et charge moteur,
   une table de corrélation entre la température de l'huile de lubrification du moteur et la température matière, et
   une table de corrélation entre la température du fluide en sortie du moteur et la température matière ;
- dans le cas où la température matière est indisponible, le dispositif comprend des moyens pour que, dès que le régime du moteur a dépassé un seuil donné, la pompe est arrêtée pendant une durée fixée, puis fonctionne à un débit minimal tant que la température du fluide en sortie du moteur est inférieure à un seuil donné ; et
- dans le cas où la température matière est indisponible, le dispositif comprend des moyens pour que, dès que le régime du moteur a dépassé un seuil donné, la pompe fonctionne à un débit minimal tant que la température du fluide en sortie du moteur est inférieur à un seuil fixé.

Dans la description qui suit, faite seulement à titre d'exemple, on se réfère aux dessins annexés, sur lesquels :
- la figure 1 est un schéma illustrant un moteur thermique couplé à une installation de chauffage d'un habitacle de véhicule ainsi qu'à un dispositif de refroidissement selon l'invention ;
- la figure 2 est un organigramme de fonctionnement du dispositif dans une forme de réalisation ; et
- la figure 3 est une courbe illustrant les variations du débit de saturation d'une pompe dans un aérotherme de l'installation de chauffage.

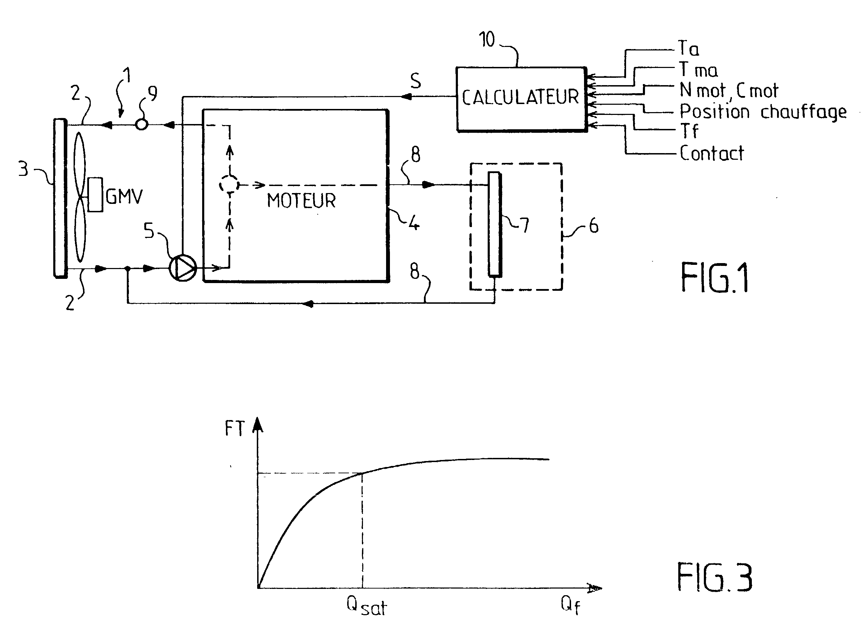

On se réfère tout d'abord à la figure 1 pour décrire un dispositif de refroidissement selon l'invention, en relation avec un moteur froid, ce qui correspond à un état de démarrage ED.

Le dispositif de refroidissement comprend tout d'abord un circuit de refroidissement 1 comportant des conduits 2 dans lesquels circule un fluide de refroidissement, par exemple de l'eau additionnée d'un antigel tel que du glycol. Ces conduits alimentent un radiateur de refroidissement 3 balayé par un flux d'air résultant soit du déplacement du véhicule, soit du fonctionnement d'un groupe moto-ventilateur GMV. Une partie du circuit de refroidissement 1 pénètre dans le moteur thermique 4 du véhicule pour permettre son refroidissement.

Le circuit 1 comporte par ailleurs une pompe à fluide 5 actionnée par un moteur, ici un moteur électrique, et dont le débit peut être varié de manière à permettre la gestion du débit du fluide de refroidissement injecté dans le moteur 4.

Le circuit de refroidissement 1 comporte également, de préférence, un thermostat piloté 9. Dans l'exemple représenté, le circuit de refroidissement 1 est couplé à une installation de chauffage 6 de l'habitacle du véhicule. Cette installation comporte notamment un radiateur de chauffage 7, encore appelé "aérotherme", alimenté par des conduits 8 montés en dérivation sur le circuit de refroidissement 1.

Le débit de la pompe à fluide 5 est géré à l'aide d'un signal S fourni par un module de commande 10 qui peut être réalisé, par exemple, sous la forme d'un micro-processeur, ou d'un ASIC. Il s'agit en fait d'un calculateur qui, en fonction de paramètres qui vont être précisés, détermine la valeur du débit minimal de la pompe (appelé débit optimal), juste nécessaire au moteur pour se refroidir en regard de son point de fonctionnement en cours et d'autres paramètres.

On entend ici par point de fonctionnement du moteur, d'une part son régime (représenté par la variable Nmot) et, d'autre part, sa charge (représentée par la variable Cmot).

Pour qu'un moteur fonctionne selon son rendement maximal, il doit être à une température qui dépend notamment de son point de fonctionnement, et par conséquent de son régime et de sa charge. Si la température est trop basse, la température du circuit d'huile qui alimente le moteur n'est pas optimal, si bien que la fluidité de l'huile ne permet pas au moteur de fonctionner à plein rendement. De plus, cela contribue à user plus rapidement les pièces du moteur. En outre, si le moteur ne travaille pas à plein rendement, il en résulte une surconsommation de carburant.

Comme on va le voir, le dispositif de l'invention définit une stratégie de pilotage de la pompe à fluide qui calcule, en fonction de certaines données d'entrée, un régime de pompe à appliquer. Ce régime est désigné ici par Np. Dans la suite de la description, on part des hypothèses que les conduits du circuit reliés à l'aérotherme 7 ne comportent pas de vanne de régulation et que l'on ne prend pas en compte la gestion du pulseur (non représenté) qui permet d'envoyer dans l'habitacle le flux d'air ayant balayé l'aérotherme 7.

Dans l'exemple, les données d'entrée du calculateur 10 (figure 1) sont les mesures des valeurs suivantes :
- température matière : Tma,
- température de l'air ambiant : Ta,
- régime moteur : Nmot,
- charge du moteur : Cmot,
- température du fluide en sortie du moteur : Tf, et
- position de chauffage : Dch.

La température matière Tma est une température représentative de l'état thermique du moteur, par exemple une température au niveau d'un pontet intersoupape, une température d'un joint de bougie, une température du métal en haut de cylindre, une température au niveau du joint de culasse du moteur. Cela suppose donc que cette température est disponible par un capteur approprié.

La température de l'air ambiant Ta est prise à l'extérieur du véhicule par un capteur approprié.

Le régime du moteur Nmot correspond au nombre de tours du moteur et est fourni par exemple par un calculateur d'injection.

La charge du moteur Cmot est fournie par exemple par la position de la pédale d'accélérateur, la position d'un papillon de carburateur, etc.

La température du fluide en sortie du moteur Tf est fournie par un capteur de température approprié.

La position de chauffage Dch est définie par une valeur en pourcentage de la demande de chauffage maximale.

Cette position peut être fournie directement par un organe de réglage manuel ou à partir de la température de consigne et de la température de l'habitacle dans le cas d'un appareil de chauffage/climatisation automatique.

Par conséquent, cette position de chauffage peut être comprise entre 0% (pas de demande de chauffage), et 100% (demande de chauffage maximale).

Le calculateur 10 (figure 1) reçoit aussi une donnée d'entrée dit "contact" pour fournir un signal indiquant que le moteur thermique fonctionne. Pour cela, des moyens sont prévus pour détecter si le contact du moteur est ouvert. Il est prévu en outre un capteur pour détecter si le régime du moteur (Nmot) dépasse un seuil donné, ce seuil correspondant par exemple à un régime du moteur égal à 400 tours/minute.

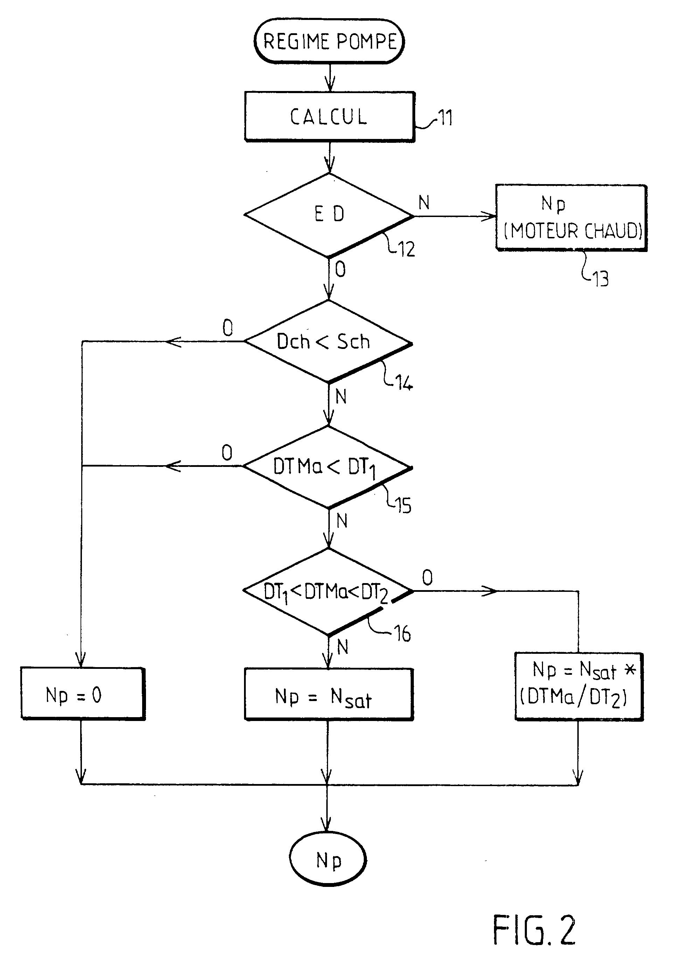

On se réfère maintenant à l'organigramme de la figure 2 pour décrire le fonctionnement du calculateur 10 qui pilote la pompe à fluide 5.

Le calculateur 10 comprend des moyens de calcul 11 qui déterminent par un comparateur 12 si le moteur est à l'état de démarrage ED. Pour que cet état soit satisfait, il faut que le moteur fonctionne et que son régime dépasse un seuil donné, par exemple de 400 tours/minute, comme indiqué précédemment. Si cette comparaison est négative, c'est-à-dire s'il s'avère que le moteur n'est pas dans son état de démarrage, le régime de la pompe Np est géré par d'autres moyens de calcul 13 qui ne font pas partie de l'invention, et qui concerne le fonctionnement en régime du moteur à chaud.

La détection de la phase de démarrage ED peut être définie par l'un des critères suivants :
- Température de fluide Tf inférieure à un seuil Tfs fixé selon l'architecture du moteur, par exemple égal à 40° C ;
- Température matière Tma inférieure à Tm1, où Tm1 est un seuil correspondant à la température matière, par exemple compris entre 110°C et 130°C ;
- Température d'huile Th inférieure à Th1, où Th1 est un seuil de la température de l'huile, par exemple compris entre 40°C et 50°C.

Dans la suite on supposera que la température matière Tma est disponible et que l'état de démarrage est déterminé aussi par un seuil de température matière.

Ainsi, si Tma est inférieure à Tm1, le calculateur détermine que l'on se trouve dans l'état de démarrage ED.

Le calculateur prend alors en compte la demande de chauffage Dch et un autre paramètre DTMa qui correspond à la différence de température entre le fluide et l'air ambiant, c'est-à-dire Tf - Ta.

Un comparateur 14 compare Dch et un seuil Sch de la demande de chauffage. Ce seuil Sch peut correspondre par exemple à 5% de la valeur maximale de la demande de chauffage.

Si la demande de chauffage Dch est égale à 0 ou inférieure au seuil Sch, alors le calculateur envoie un signal S qui stoppe la pompe à fluide 5, ce qui signifie que son régime Np est égal à 0.

Si la demande de chauffage est supérieure à Sch (par exemple 5%), le calculateur compare l'écart de température DTMa à deux seuils de température à savoir un premier seuil, ou seuil inférieur, DT1 et un deuxième seuil, ou seuil supérieur, DT2. Ces seuils DT1 et DT2 peuvent par exemple correspondre respectivement à 10°C et 40°C.

Un comparateur 15 compare DTMa et DT1. Si DTMa est inférieur à DT1, alors le calculateur stoppe le fonctionne de la pompe (Np=0).

Si DTMa est compris entre DT1 et DT2, alors le calculateur pilote la pompe de manière que son régime Np soit proportionnel à un régime de saturation Nsat conformément à la relation Np = Nsat * (DTMa/DT2).

Nsat est le régime de la pompe qui permet d'obtenir un débit de saturation dans l'aérotherme 7. Ce débit de saturation correspond au débit du fluide qui permet d'obtenir 90% d'un flux thermique asymptotique pour un débit d'air donné comme montré sur la figure 3 qui illustre les variations du flux thermique FT en fonction du débit du fluide Qf, le débit de saturation étant désigné par Qsat.

Dans le cas où DTMa est supérieur à DT2, alors le calculateur établit le régime de la pompe de sorte qu'il correspond au régime de saturation, c'est-à-dire que l'on a alors Np = Nsat.

Les conditions indiquées précédemment correspondaient au cas où Tma est inférieure à Tm1.

Lorsque Tmat est supérieure à Tm1 on quitte alors les conditions correspondant à l'état de démarrage. Le régime de la pompe Np est alors établi par d'autres moyens qui ne font pas directement partie de l'invention.

Généralement, on s'arrange pour que le régime de la pompe Np soit égal à la valeur la plus élevée correspondant à un régime de pompe Nmini et un régime de pompe Noptimal. On désigne ici par Nmini le régime de la pompe qui permet d'obtenir le débit juste nécessaire pour bien refroidir le moteur et qui dépend du point de fonctionnement du moteur, c'est-à-dire de son régime Nmot et de sa charge Cmot.

Noptimal désigne le régime de pompe qui permet d'obtenir le débit de fluide dans l'aérotherme qui assure le meilleur compromis chauffage /consommation pour une vitesse de pulseur donnée et un besoin de chauffage donné.

Dans ce qui précède, on a supposé que la température matière Tma est disponible, par exemple à partir d'un capteur comme indiqué.

Dans certain cas, cette température matière n'est pas disponible directement.

On peut alors envisager trois possibilités.

Dans un premier cas, le calculateur fournit une valeur estimée de la température matière, ce qui ramène ensuite au cas précédent. Cette estimation peut être réalisée de trois manières.

Une première possibilité consiste à fournir un modèle de moteur thermique qui calcule la température matière Tma en fonction d'un historique régime moteur (Nmot) et charge moteur (Cmot).

Une deuxième possibilité est d'établir une table de corrélation entre la température de l'huile de lubrification (Th) du moteur et la température matière Tma.

Une troisième possibilité est d'établir une table de corrélation entre la température du fluide Tf en sortie du moteur et la température matière Tma.

Il est possible aussi de réaliser une temporisation avec des débits nuls et réduits.

Dans une variante, le dispositif comprend des moyens pour que, dès que le régime du moteur a dépassé un seuil donné (par exemple Nmot supérieur à 400 tours/minute) la pompe est arrêtée pendant une durée fixée. Ensuite la pompe fonctionne à un débit minimal tant que la température du fluide en sortie du moteur est inférieure à un seuil fixé, par exemple compris entre 40 et 90°C.

Une autre possibilité est de réaliser une temporisation avec débits réduits. Le dispositif peut alors comprendre des moyens pour que, dès que le régime du moteur a dépassé un seuil donné (par exemple Nmot supérieur à 400 tours/minute), la pompe fonctionne à un débit minimal tant que la température du fluide en sortie du moteur est inférieur à un seuil fixé, par exemple compris entre 40 et 90°C.

Bien entendu l'invention n'est pas limitée aux formes de réalisation décrites précédemment à titre d'exemple et s'étend à d'autres variantes.

## Revendications

1. Dispositif de régulation du refroidissement d'un moteur thermique (4) de véhicule automobile, du type comprenant un circuit de refroidissement de fluide (1) couplé à une pompe à fluide (5) pour refroidir ledit moteur thermique dont le fonctionnement est défini à chaque instant par un régime (Nmot) et une charge (Cmot) en cours, ledit circuit alimentant une installation de chauffage et/ou climatisation (6) de l'habitacle du véhicule, à paramètres aérothermiques réglables, comportant un aérotherme (7),
**caractérisé en ce qu'**il comprend :
des moyens (10) pour établir un état de démarrage (ED) du moteur en fonction de conditions choisies ; et
des moyens (10), actifs en cet état de démarrage pour, en fonction d'une grandeur représentative de la demande de chauffage (Dch), et d'au moins une autre grandeur (Tma),
* soit stopper la pompe (5) si la demande de chauffage (Dch) est inférieure à un certain seuil (Sch);
* sinon, piloter la pompe (5) en fonction d'un régime de saturation (Nsat).

2. Dispositif selon la revendication 1, **caractérisé en ce que** les moyens pour établir l'état de démarrage (ED) du moteur comprennent des moyens pour détecter le fonctionnement du moteur et des moyens pour mesurer ou estimer une température représentative de l'état thermique du moteur et la comparer à un seuil donné, afin d'établir l'état de démarrage lorsque cette température est inférieure à ce seuil.

3. Dispositif selon la revendication 2, **caractérisé en ce que** les moyens pour détecter le fonctionnement du moteur comprennent un capteur pour détecter si le contact du moteur est ouvert et un capteur pour détecter si le régime du moteur (Nmot) dépasse un seuil donné.

4. Dispositif selon l'une des revendications 2 et 3, **caractérisé en ce que** la température représentative de l'état thermique du moteur est une température matière (Tma) du moteur.

5. Dispositif selon l'une des revendications 2 et 3, **caractérisé en ce que** la température représentative de l'état thermique du moteur est une température du fluide (Tf) en sortie du moteur.

6. Dispositif selon l'une des revendications 2 et 3, **caractérisé en ce que** la température représentative de l'état thermique du moteur est une température du fluide (Tf) dans le moteur.

7. Dispositif selon l'une des revendications 2 et 3, **caractérisé en ce que** la température représentative de l'état thermique du moteur est une température de l'huile de lubrification (Th) du moteur.

8. Dispositif selon l'une des revendications 1 à 7, **caractérisé en ce que** la grandeur représentative de la demande de chauffage est une position de chauffage (Dch) définie par une valeur en pourcentage de la demande de chauffage maximale, et **en ce que** les moyens actifs reçoivent en outre une grandeur représentative d'un écart de température (DTMa) entre la température du fluide (Tf) en sortie du moteur et la température de l'air ambiant (Ta).

9. Dispositif selon la revendication 8, **caractérisé en ce que** les moyens actifs comprennent des moyens de commande propres à stopper ou piloter la pompe comme suit :
* si la demande de chauffage (Dch) est nulle ou inférieure au seuil (Sch), alors stopper la pompe (Np = 0)
* si la demande de chauffage (Dch) dépasse ledit seuil (Sch), alors
** si l'écart de température (DTMa) est inférieur à un premier seuil (DT1), alors stopper la pompe (Np = 0);
** si l'écart de température (DTMa) est supérieur au premier seuil (DT1) et inférieur à un deuxième seuil (DT2), alors piloter la pompe en établissant le régime de la pompe (Np) à une valeur proportionnelle au régime de saturation (Nsat) qui correspond au régime de la pompe permettant d'obtenir un débit de saturation dans l'aérotherme, comme défini par la relation : Np = Nsat * (DTMa/DT2),
** si l'écart de température (DTMa) est supérieur au deuxième seuil (DT2), alors piloter la pompe en établissant le régime de la pompe (Np) à une valeur égale au régime de saturation (Nsat).

10. Dispositif selon l'une des revendications 1 à 9, **caractérisé en ce que** ladite autre condition est liée à une température de matière (Tma) représentative de l'état thermique du moteur.

11. Dispositif selon la revendication 10, **caractérisé en ce que**, dans le cas où la température matière (Tma) est disponible, il comprend des moyens de comparaison pour comparer la température matière (Tma) à une température seuil (Ts), et
** si la température matière est inférieure à ce seuil, alors activer les dits moyens actifs,
** si la température matière est supérieure à ce seuil, alors inactiver les dits moyens actifs et établir le régime de pompe à la valeur juste nécessaire au bon refroidissement du moteur en tenant compte du régime (Nmot) et de la charge (Cmot) en cours du moteur.

12. Dispositif selon la revendication 10, **caractérisé en ce que**, dans le cas où la température matière (Tma) est indisponible, le dispositif comprend des moyens d'estimation pour estimer cette température matière (Tma).

13. Dispositif selon la revendication 12, **caractérisé en ce que** les moyens d'estimation sont choisis parmi :
- un modèle de moteur thermique qui calcule la température matière (Tma) en fonction d'un historique régime moteur (Nmot) et charge moteur (Cmot),
- une table de corrélation entre la température de l'huile de lubrification (Th) du moteur et la température matière (Tma), et
- une table de corrélation entre la température du fluide (Tf) en sortie du moteur et la température matière (Tma).

14. Dispositif selon la revendication 10, **caractérisé en ce que**, dans le cas où la température matière (Tma) est indisponible, le dispositif comprend des moyens pour que, dès que le régime du moteur (Nmot) a dépassé un seuil donné, la pompe est arrêtée pendant une durée fixée, puis fonctionne à un débit minimal tant que la température du fluide (Tf) en sortie du moteur est inférieure à un seuil fixé.

15. Dispositif selon la revendication 10, **caractérisé en ce que**, dans le cas où la température matière (Tma) est indisponible, le dispositif comprend des moyens pour que, dès que le régime du moteur (Nmot) a dépassé un seuil donné, la pompe fonctionne à un débit minimal tant que la température du fluide (Tf) en sortie du moteur est inférieure à un seuil fixé.

## Patentansprüche

1. Vorrichtung zur Regelung der Kühlung eines Wärmemotors (4) für ein Kraftfahrzeug mit einem an eine Fluidpumpe (5) angekoppelten Kühlfluidkreislauf (1) zum Kühlen des Wärmemotors, dessen Betrieb zu jedem Zeitpunkt durch eine Drehzahl (Nmot) und eine Istlast (Cmot) definiert ist, wobei der Kreislauf eine Heiz- und/oder Klimaanlage (6) für den Fahrgastraum des Fahrzeugs versorgt, mit einstellbaren aerothermischen Parametern, und die ein Luftheizgerät (7) umfasst, **dadurch gekennzeichnet, dass** sie folgendes umfasst:
Mittel (10) zum Etablieren eines Anlaufzustands (ED) des Motors in Abhängigkeit von gewählten Bedingungen und
Mittel (10), die in diesem Anlaufzustand aktiv sind, um in Abhängigkeit von einer für den Heizbedarf (Dch) repräsentativen Größe und zumindest einer anderen Größe (Tma)
* entweder die Pumpe (5) zu stoppen, wenn der Heizbedarf (Dch) kleiner als ein bestimmter Grenzwert (Sch) ist,
* oder andernfalls die Pumpe (5) in Abhängigkeit von einer Sättigungsdrehzahl (Nsat) zu steuern.

2. Vorrichtung nach Anspruch 1, **dadurch gekennzeichnet, dass** die Mittel zum Etablieren des Anlaufzustands (ED) des Motors Mittel umfassen, um den Betrieb des Motors zu erfassen, und Mittel, um eine für den thermischen Zustand des Motors repräsentative Temperatur zu messen oder zu schätzen und sie mit einen gegebenen Grenzwert zu vergleichen, um den Anlaufzustand zu etablieren, wenn diese Temperatur kleiner als dieser Grenzwert ist.

3. Vorrichtung nach Anspruch 2, **dadurch gekennzeichnet, dass** die Mittel zum Erfassen des Betriebs des Motors einen Aufnehmer umfassen, um es zu erfassen, wenn der Kontakt des Motors offen ist, und einen Aufnehmer, um es zu erfassen, wenn die Drehzahl des Motors (Nmot) einen gegebenen Grenzwert überschreitet.

4. Vorrichtung nach Anspruch 2 und 3, **dadurch gekennzeichnet, dass** die für den thermischen Zustand des Motors repräsentative Temperatur eine Materialtemperatur (Tma) des Motors ist.

5. Vorrichtung nach Anspruch 2 und 3, **dadurch gekennzeichnet, dass** die für den thermischen Zustand des Motors repräsentative Temperatur eine Fluidtemperatur (Tf) am Ausgang des Motors ist.

6. Vorrichtung nach Anspruch 2 und 3, **dadurch gekennzeichnet**, das die für den thermischen Zustand des Motors repräsentative Temperatur eine Fluidtemperatur (Tf) im Motor ist.

7. Vorrichtung nach Anspruch 2 und 3, **dadurch gekennzeichnet**, das die für den thermischen Zustand des Motors repräsentative Temperatur eine Temperatur (Th) des Schmieröls des Motors ist.

8. Vorrichtung nach einem der Ansprüche 1 bis 7, **dadurch gekennzeichnet, dass** die für den Heizbedarf repräsentative Größe eine Heizungsposition (Dch) ist, die durch einen Prozentwert des maximalen Heizbedarfs definiert ist, und dass die aktiven Mittel außerdem eine für den Temperaturunterschied (DTMa) zwischen der Fluidtemperatur (Tf) am Ausgang des Motors und der Temperatur der Umgebungsluft (Ta) empfangen.

9. Vorrichtung nach Anspruch 8, **dadurch gekennzeichnet, dass** die aktiven Mittel Steuermittel sind, die geeignet sind, die Pumpe wie folgt zu stoppen oder zu steuern:
* wenn der Heizbedarf (Dch) Null oder kleiner als der Grenzwert (Sch) ist, dann wird die Pumpe gestoppt (Np = 0),
* wenn der Heizbedarf (Dch) den Grenzwert (Sch) überschreitet, und
** wenn der Temperaturunterschied (DTMa) kleiner als ein erster Grenzwert (DT1) ist, dann wird die Pumpe gestoppt (Np = 0),
** wenn der Temperaturunterschied (DTMa) größer als der erste Grenzwert (DT1) und kleiner als ein zweiter Grenzwert (DT2) ist, dann wird die Pumpe so gesteuert, dass die Drehzahl der Pumpe (Np) auf einen Wert gesetzt wird, der proportional zur Sättigungsdrehzahl (Nsat) ist, die der Drehzahl der Pumpe entspricht, die es gestattet, den Sättigungsdurchfluss in dem Luftheizgerät zu erhalten, wie er durch die Beziehung Np = Nsat * (DTMa/DT2) definiert ist,
** wenn der Temperaturunterschied (DTMa) größer als der zweite Grenzwert (DT2) ist, dann wird die Pumpe so gesteuert, dass die Drehzahl der Pumpe (Np) auf einen Wert gleich der Sättigungsdrehzahl (Nsat) gesetzt wird.

10. Vorrichtung nach einem der Ansprüche 1 bis 9, **dadurch gekennzeichnet, dass** die andere Bedingung mit einer für den thermischen Zustand des Motors repräsentativen Materialtemperatur (Tma) verknüpft ist.

11. Vorrichtung nach Anspruch 10, **dadurch gekennzeichnet, dass** in dem Fall, dass die Materialtemperatur (Tma) verfügbar ist, sie Vergleichsmittel zum Vergleichen der Materialtemperatur (Tma) mit einer Grenzwerttemperatur (Ts) umfasst, und dass
** wenn die Materialtemperatur kleiner als dieser Grenzwert ist, dann die aktiven Mittel aktiviert werden,
** wenn die Materialtemperatur größer als dieser Grenzwert ist, dann die aktiven Mittel deaktiviert werden und die Pumpdrehzahl auf den Wert gebracht wird, der für eine gute Kühlung des Motors gerade hinreichend ist, wobei die Drehzahl (Nmot) und die Istlast (Cmot) des Motors berücksichtigt werden.

12. Vorrichtung nach Anspruch 10, **dadurch gekennzeichnet, dass** in dem Fall, dass die Materialtemperatur (Tma) nicht verfügbar ist, die Vorrichtung Schätzmittel umfasst, um diese Materialtemperatur (Tma) zu schätzen.

13. Vorrichtung nach Anspruch 12, **dadurch gekennzeichnet, dass** als Schätzmittel eines der folgenden gewählt wird:
- ein thermisches Motormodell, das die Materialtemperatur (Tma) in Abhängigkeit von einer Motordrehzahl(Nmot)- und Motorlast(Cmot)-Historie berechnet,
- eine Korrelationstabelle für die Temperatur des Schmieröls (Th) und die Materialtemperatur (Tma) und
- eine Korrelationstabelle für die Fluidtemperatur (Tf) am Ausgang des Motors und die Materialtemperatur (Tma).

14. Vorrichtung nach Anspruch 10, **dadurch gekennzeichnet, dass** in dem Fall, dass die Materialtemperatur (Tma) nicht verfügbar ist, die Vorrichtung Mittel dafür umfasst, dass, sobald die Motordrehzahl (Nmot) einen gegebenen Grenzwert überschritten hat, die Pumpe während einer festen Zeitdauer angehalten wird und dann mit einem minimalen Durchfluss arbeitet, solange die Temperatur des Fluids (Tf) am Ausgang des Motors kleiner als ein fester Grenzwert ist.

15. Vorrichtung nach Anspruch 10, **dadurch gekennzeichnet, dass** in dem Fall, dass die Materialtemperatur (Tma) nicht verfügbar ist, die Vorrichtung Mittel dafür umfasst, dass, sobald die Motordrehzahl (Nmot) einen gegebenen Grenzwert überschritten hat, die Pumpe mit einem minimalen Durchfluss arbeitet, solange die Temperatur des Fluids (Tf) am Ausgang des Motors kleiner als ein fester Grenzwert ist.

## Claims

1. Device for regulating the cooling of a motor vehicle combustion engine (4), of the type comprising a fluid cooling circuit (1) coupled to a fluid pump (5) for cooling the said combustion engine whose operation is defined at each instant by a current speed (Nmot) and load (Cmot), the said circuit supplying an installation (6) for heating and/or air conditioning the cabin of the vehicle, with adjustable aerothermic parameters, comprising a unit heater (7),
**characterized in that** it comprises:
means (10) for establishing a startup state (ED) of the engine as a function of chosen conditions; and
means (10), active in this startup state for, as a function of a quantity representative of the heating demand (Dch), and of at least one other quantity (Tma),
* either stopping the pump (5) if the heating demand (Dch) is below a certain threshold (Sch);
* else, operating the pump (5) as a function of a saturation speed (Nsat).

2. Device according to Claim 1, **characterized in that** the means for establishing the startup state (ED) of the engine comprise means for detecting operation of the engine and means for measuring or estimating a temperature representative of the thermal state of the engine and comparing it with a given threshold, in order to establish the startup state when this temperature is below this threshold.

3. Device according to Claim 2, **characterized in that** the means for detecting operation of the engine comprise a sensor for detecting whether the contact of the engine is open and a sensor for detecting whether the speed of the engine (Nmot) exceeds a given threshold.

4. Device according to one of Claims 2 and 3, **characterized in that** the temperature representative of the thermal state of the engine is a material temperature (Tma) of the engine.

5. Device according to one of Claims 2 and 3, **characterized in that** the temperature representative of the thermal state of the engine is a temperature of the fluid (Tf) on exit from the engine.

6. Device according to one of Claims 2 and 3, **characterized in that** the temperature representative of the thermal state of the engine is a temperature of the fluid (Tf) in the engine.

7. Device according to one of Claims 2 and 3, **characterized in that** the temperature representative of the thermal state of the engine is a temperature of the lubricating oil (Th) of the engine.

8. Device according to one of Claims 1 to 7, **characterized in that** the quantity representative of the heating demand is a heating position (Dch) defined by a value in percentage of the maximum heating demand, and **in that** the active means furthermore receive a quantity representative of a temperature difference (DTMa) between the temperature of the fluid (Tf) on exit from the engine and the temperature of the ambient air (Ta).

9. Device according to Claim 8, **characterized in that** the active means comprise control means able to stop or to operate the pump as follows:
* if the heating demand (Dch) is zero or below the threshold (Sch), then stop the pump (Np = 0)
* if the heating demand (Dch) exceeds the said threshold (Sch), then
** if the temperature difference (DTMa) is below a first threshold (DT1), then stop the pump (Np = 0);
** if the temperature difference (DTMa) is above the first threshold (DT1) and below a second threshold (DT2), then operate the pump by establishing the speed of the pump (Np) at a value proportional to the saturation speed (Nsat) which corresponds to the speed of the pump making it possible to obtain a saturation flow rate in the unit heater, as defined by the relation: Np = Nsat * (DTMa/DT2),
** if the temperature difference (DTMa) is above the second threshold (DT2), then operate the pump by establishing the speed of the pump (Np) at a value equal to the saturation speed (Nsat).

10. Device according to one of Claims 1 to 9, **characterized in that** the said other condition is related to a material temperature (Tma) representative of the thermal state of the engine.

11. Device according to Claim 10, **characterized in that**, in the case where the material temperature (Tma) is available, it comprises means of comparison for comparing the material temperature (Tma) with a threshold temperature (Ts), and
** if the material temperature is below this threshold, then activate the said active means,
** if the material temperature is above this threshold, then inactivate the said active means and establish the pump speed at the value just necessary for the proper cooling of the engine taking account of the current speed (Nmot) and load (Cmot) of the engine.

12. Device according to Claim 10, **characterized in that**, in the case where the material temperature (Tma) is unavailable, the device comprises means of estimation for estimating this material temperature (Tma).

13. Device according to Claim 12, **characterized in that** the means of estimation are chosen from among:
- a combustion engine model which computes the material temperature (Tma) as a function of a history of engine speed (Nmot) and of engine load (Cmot),
- a table of correlation between the temperature of the lubricating oil (Th) of the engine and the material temperature (Tma), and
- a table of correlation between the temperature of the fluid (Tf) on exit from the engine and the material temperature (Tma).

14. Device according to Claim 10, **characterized in that**, in the case where the material temperature (Tma) is unavailable, the device comprises means such that, as soon as the speed of the engine (Nmot) has exceeded a given threshold, the pump is shut down for a fixed duration, then operates at a minimum flow rate for as long as the temperature of the fluid (Tf) on exit from the engine is below a fixed threshold.

15. Device according to Claim 10, **characterized in that**, in the case where the material temperature (Tma) is unavailable, the device comprises means such that, as soon as the speed of the engine (Nmot) has exceeded a given threshold, the pump operates at a minimum flow rate for as long as the temperature of the fluid (Tf) on exit from the engine is below a fixed threshold.
